Europäisches Patentamt

European Patent Office

Office européen des brevets

(19)

(11)  **EP 1 403 868 A2**

(12)  **EUROPEAN PATENT APPLICATION**

(43)  Date of publication:
      **31.03.2004  Bulletin 2004/14**

(51)  Int Cl.⁷: $G11B\ 20/10$, $G11B\ 19/04$

(21)  Application number: **03021696.4**

(22)  Date of filing: **29.09.2003**

(84)  Designated Contracting States:
      **AT BE BG CH CY CZ DE DK EE ES FI FR GB GR
      HU IE IT LI LU MC NL PT RO SE SI SK TR**
      Designated Extension States:
      **AL LT LV MK**

(30)  Priority: **30.09.2002  JP  2002287909**

(71)  Applicant: **Mitsumi Electric Co., Ltd.
      Tama-Shi, Tokyo (JP)**

(72)  Inventor: **Tanimukai, Hiromichi,
      Mitsumi Electric Co., Ltd.
      Atsugi-shi Kanagawa (JP)**

(74)  Representative: **Patentanwälte Dr. Solf & Zapf
      Candidplatz 15
      81543 München (DE)**

(54)  **Optical disc drive and method of consecutively recording data onto recordable optical disc in optical disc drive**

(57)      An optical disc drive of the present invention includes a buffer memory 35 for temporarily storing the data received from the host, consecutive recording means which temporarily interrupts recording of the data onto an optical disc 2 in the case where the data transfer from the host cannot keep up with the recording process and the data stored in the buffer memory 35 falls below a predetermined amount, and then consecutively records the remaining data from the end of the recorded data when the buffer memory 35 is filled with data transferred from the host, counting means for counting the number of recording interruptions, and recording-speed adjustment means for adjusting the recording speed for the optical disc in the case where the count number by the counting means is greater than a predetermined value. The optical disc drive further includes judgment means for judging whether the recording interruption is due to a regular cause or a sudden cause, and the counting means may count the number of recording interruptions due to the regular cause.

Fig. 1

**Description**

FIELD OF THE INVENTION

The present invention is related to an optical disc drive which carries out recording and reproducing data onto and from an optical disc onto which data can be recorded such as a CD-R, a CD-RW or the like, and to a method of consecutively recording data onto a recordable optical disc in an optical disc drive.

DESCRIPTION OF THE PRIOR ART

In the case where data is recorded by an optical disc drive which carries out recording and reproducing data onto and from an optical disc onto which data can be recorded (recordable optical disc) such as a CD-R, a CD-RW or the like (hereafter, such optical disc will be referred to simply as "optical disc"), the data transferred in from a host computer (hereafter, referred to simply as "host") is temporarily stored in a buffer memory (a buffer RAM) of the optical disc drive, and then such stored data is sequentially read out and recorded (written) onto the optical disc. In this case, there is no problem, as long as the data transfer from the host can catch up writing process. However, for example, when another application software is started (launched) during the data transfer from the host, the data transfer performance of the host is lowered, and then recording is interrupted by the insufficient storage of data in the buffer memory, whereby a writing error is formed. The writing error caused in this way is generally called a buffer under-run error.

This kind of buffer under-run error occurs in the case where the data transfer performance (especially, the performance and the like of the CPU) of the host is inferior to the data writing performance, the case where the recording speed (disc recording speed) of the optical disc drive is fast, and the case where the data transfer rate between the optical disc drive and the host is slow (for example, optical disc drive using a USB connection).

For this reason, in order to avoid interruption of recording operation (recording (operation) interruption) due to this kind of buffer under-run error, many of the recent optical disc drives capable of recording data onto an optical disc such as a CD-R, a CD-RW or the like are provided with a buffer under-run error avoidance function. In the buffer under-run error avoidance function, the amount of data stored in the buffer memory is monitored, and in the case where such the amount of data is below a predetermined amount, the writing process of data is temporarily interrupted (suspended), and after the data transferred to the buffer memory from the host reaches a certain storage level, the end of the recorded data is detected, and then the consecutively recording process of unrecorded data (remaining data) is continued again from such end. Thus, it is possible to write (record) data onto the optical disc while maintaining the continuity of the data. In particular, since the recording (writing) speed in optical disc drives has recently reached the high speed of 32x speed, there are many cases where the data transfer from the host cannot keep up with the recording speed. Therefore, in these cases such buffer under-run error avoidance function is very important. Examples of method for avoiding buffer under-run errors are disclosed in Laid-Open Japanese Patent Publication No. HEI 10-49990 and Laid-Open Japanese Patent Publication No. 2000-40302.

In the case where data is consecutively recorded by the optical disc drive with a buffer under-run error avoidance function described above, the end of the recorded data is detected by a seek operation or the like of the optical pick-up, and then the remaining unrecorded data is consecutively recorded from the position of such end. In this case, a specific amount of time (for example, substantially 1 or 2 seconds) is required for this series of operations. For this reason, if the time required for this buffer under-run error avoidance operation is made longer than the time required for storing the data transferred from the host in the buffer memory, a time required until memory space can be created in the buffer memory after recording process is actually started again, i.e., a time ($\alpha$) for waiting for the data transfer of the host is required. In the state where many recording interruptions for buffer under-run error avoidance regularly occur due to the performance and the like of the host, since the time ($\alpha$) increases cumulatively as the number of recording interruptions, there is the problem that the recording time becomes long. Namely, the relationship between the recording time and the number of recording interruptions that occur for buffer under-run error avoidance is given below.

$$\text{(recording time)} = \text{(total data transfer time)} + (\alpha) \times \text{(number of recording interruptions)}$$

In this regard, even if an optical disc drive has a fast recording (writing) speed, in the case that there are a large number of recording interruptions that occur for buffer under-run error avoidance, the resulting total recording time will become very long.

Further, the recording interruptions for buffer under-run error avoidance described above can be largely divided into the two classifications of regular interruptions and sudden (irregular) interruptions. Regular interruptions mainly result from the performance and the like of the host, and occur at substantially regular intervals during the writing operation because the data transfer from the host to the optical disc drive cannot keep up with the writing operation. On the other hand, sudden interruptions occur suddenly in the case where another application software is started at the host, for example, or the like. These kinds of sudden interruptions occur while the data transfer between the host and the optical disc drive is keeping up with the recording operation, and are therefore caused by other factors.

SUMMARY OF THE INVENTION

It is an object of the present invention to solve the problems resulting from the buffer under-run error avoidance described above, and provide an optical disc drive which makes it possible to shorten the total recording time when many recording interruptions for buffer under-run error avoidance occur during the recording operation.

In order to achieve the object, in one aspect of the present invention, an optical disc drive of the present invention is directed to an optical disc drive capable of recording data received from a host onto a recordable optical disc at a recording speed of any one of multiple recording speed levels. The optical disc drive comprising:

storage means for temporarily storing the data received from the host;
consecutively recording means which temporarily interrupts recording of the data onto the optical disc in the case where the data transfer from the host cannot keep up with the recording process and the data stored in the storage means falls below a predetermined amount, and then consecutively records the remaining data from the end of the recorded data in a substantially successive manner when the storage means is filled with data transferred from the host;
counting means for counting the number of recording interruptions performed by the consecutively recording means; and
recording-speed adjustment means for adjusting the recording speed for the optical disc in the case where the count number by the counting means is greater than a predetermined value.

In this invention, the optical disc drive may be adapted to be able to switch the recording speed of the optical disc at any one of multiple speed levels, and it is preferred that the recording-speed adjustment means switches the recording speed one level lower than the present recording speed in the case where the count number by the counting means is greater than the predetermined value.

In this case, it is preferred that the predetermined value is established so that, by comparing the time T1, which is believed to be required in the case where all of the data would be recorded onto the optical disc with recording interruptions at the present recording speed of the optical disc at which the recording interruptions occur, with the time T2, which is believed to be required in the case where recording would be carried out at the recording speed one level lower than the present recording speed, the time T2 is shorter than the time T1.

Alternatively, the counting means may count the number of recording interruptions in a predetermined time, and it is preferred that the recording-speed adjustment means switches the recording speed one level lower than the present recording speed in the case where the count number by the counting means is greater than the predetermined value.

In this invention, it is preferred that the optical disc drive further comprises judgment means for judging whether the recording interruption is due to a regular cause or a sudden cause, and wherein the counting means counts the number of recording interruptions due to the regular cause.

In this case, it is preferred that the judgment means judges whether the recording interruption is due to the regular cause or the sudden cause based on the number of blocks that have been recorded until the recording interruption occurs.

Further, it is preferred that the judgment means judges the recording interruptions that have occurred at every substantially constant number of blocks as the recording interruptions due to the regular cause, and the recording interruptions other than the above as the recording interruptions due to the sudden cause.

Alternatively, it is preferred that the recording-speed adjustment means switches the recording speed two or more levels lower than the present recording speed in the case where the recording interruptions due to the regular cause occur with increasing frequency.

Further, in this invention, it is preferred that the regular cause is mainly caused by the performance of the host, and the sudden cause includes a cause in which the recording interruption would occur when other application software is started in the host during data transfer by the host.

In another aspect of the present invention, the present invention is directed to a method of consecutively recording data onto a recordable optical disc in an optical disc drive, the optical disc drive being able to record the data received from a host onto the recordable optical disc at a recording speed of any one of multiple recording speed levels. The method comprises the steps of:

temporarily storing the data received from the host;

temporarily interrupting recording of the data onto the optical disc in the case where the data transfer from the host cannot keep up with the recording process and the data stored in a buffer memory falls below a predetermined amount;

consecutively recording the remaining data from the end of the recorded data in a substantially successive manner when the buffer memory is filled with data transferred from the host;

counting the number of recording interruptions; and

adjusting the recording speed for the optical disc in the case where the count number in the counting step is greater than a predetermined value.

In this invention, it is preferred that in the counting step the number of recording interruptions is counted in a predetermined time, and that in the adjusting step the recording speed is switched one level lower than the present recording speed in the case where the count number is greater than the predetermined value.

Further, it is preferred that in the adjusting step the recording speed is switched one level lower than the present recording speed in the case where the count number by the counting means is greater than the predetermined value.

In this invention, it is preferred that the method further comprises the step of:

judging whether the recording interruption is due to a regular cause or a sudden cause wherein in the counting step the number of recording interruptions due to the regular cause is counted.

In this case, it is preferred that in the adjusting step the recording speed is switched two or more levels lower than the present recording speed in the case where the recording interruptions due to the regular cause occurs with increasing frequency.

The above described and other objects, structures and advantages of the present invention will be apparent when the following description of the preferred embodiment will proceed with reference to the appended drawings.

BRIEF DESCRIPTION OF THE DRAWINGS

Fig. 1 is a block diagram illustrating the circuit structure of the main portion of an optical disc drive according to the present invention.

Fig. 2 is a flowchart illustrating the process in the first embodiment of the present invention.

Fig. 3 is an explanatory diagram for explaining the deference between regular interruptions and sudden interruptions in the recording interruptions for buffer under-run error avoidance.

Fig. 4 is a flowchart illustrating the process in the second embodiment of the present invention.

DETAILED DESCRIPTION OF THE PREFERRED EMBODIMENTS

The preferred embodiments of the present invention will now be described with reference to the appended drawings.

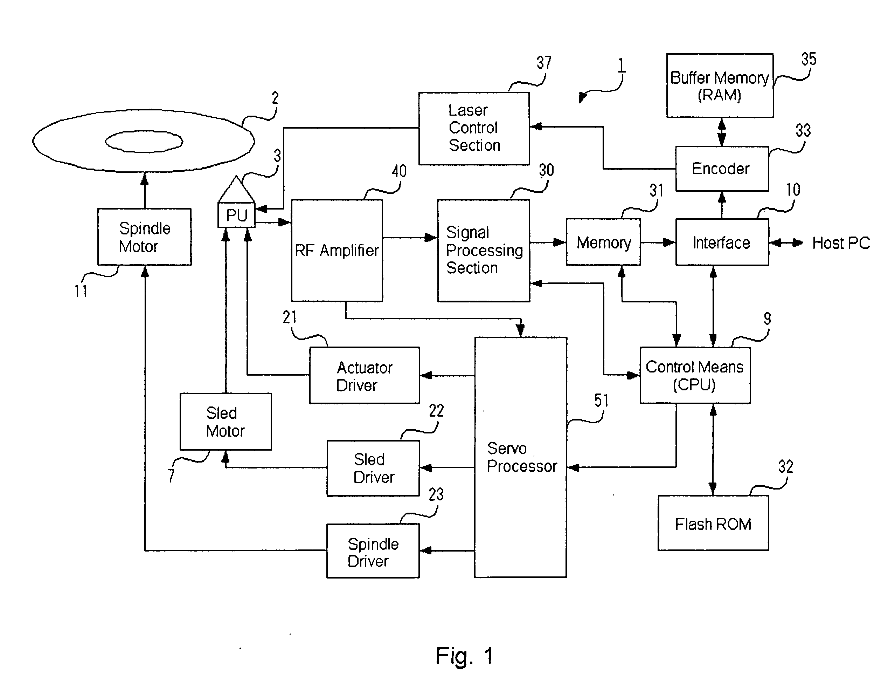

First, a description will be given for the overall structure of an optical disc drive 1 to which the present invention is applied. Fig. 1 is a block diagram illustrating the circuit structure of the main portion of an optical disc drive 1 according to one embodiment of the present invention. Now, it should be noted that this embodiment (disclosure) is to be considered as an exemplification, and therefore this structure should not be intended to limit the present invention to the specific embodiments illustrated.

In Fig. 1, the optical disc drive 1 of the present invention is a disc drive which records and/or reproduces information (data) onto and/or from an optical disc 2, which is a CD-R, a CD-RW or the like. Further, even though it is not shown in the drawings, the optical disc drive 1 of the present invention is operated by an AC or DC power source supplied from the outside.

The optical disc drive 1 is equipped with a turntable (not shown in the drawings) on which the optical disc 2 is loaded, and a spindle motor 11 that rotates the turntable (i.e., the optical disc 2) at a predetermined constant linear velocity. Further, the optical disc drive 1 is also equipped with a disc tray (not shown in the drawings) on which an optical disc such as a CD-R, a CD-RW or the like is placed. The disc tray is moved (displaced) between a position for loading or ejecting the optical disc and a position for recording or reproducing information onto or from the optical disc.

Further, the optical disc drive 1 includes: an optical pick-up (optical head) 3 which is capable of moving in a radial direction of the optical disc 2 (i.e., a radial direction of the turntable) to reproduce or record data from or onto the loaded optical disc 2; an optical pick-up base moving mechanism (not shown in the drawings) equipped with a sled motor 7 which moves an optical pick-up base of the optical pick-up 3 in the radial direction of the optical disc 2; an RF amplifier 40 which amplifies RF signals obtained by the optical pick-up 3 and then digitizes such RF signals to outputs digital data; a servo processor 51 which controls the driving (operation) of each drive portion of the spindle motor 11 and the like of the optical disc drive 1 based on the RF signals; a signal processing section 30 which demodulates (decodes) EFM signals, subcode data (digital data) and the like from the RF signals inputted from the RF amplifier 40; a memory 31 which temporarily stores the EMF signals and the like demodulated by the signal processing section 30; a flash ROM 32 for storing optimized firmware and the like for the optical disc drive 1; an encoder 33; a buffer memory (RAM) 35; a laser control section 37; control means (CPU) 9; an interface 10 which outputs the EFM signals and the like that were demodulated in the signal processing section 30 and temporarily stored in the memory 31 to a host (host computer); an actuator driver 21 for driving actuators of the optical pick-up 3; a sled driver 22 for driving the sled motor 7; and a spindle driver 23 for driving the spindle motor 11.

As shown in Fig. 1, the interface 10 is also connected to the encoder 33 that modulates input data (writing data) inputted from the host via the interface 10 into recording data that is recorded on the optical disc 2. Further, the encoder 33 is connected to the buffer memory (RAM) 35 for writing data which stores the input data modulated by the encoder 33. The EFM data (writing data) outputted from the encoder 33 is inputted into the optical pick-up 3 via the laser control section 37. Based on the EFM data, the laser control section 37 controls (drives) a laser diode (not shown in the drawings) of the optical pick-up 3 so that data is recorded on the optical disc 2.

To give a more detailed description of the main structure of the optical disc drive 1, the control means 9 is generally constituted from a microcomputer (CPU). The control means controls the overall of the elements of the optical disc drive 1, including the optical pick-up 3 (actuator, laser diode, and the like), the sled motor 7, the spindle motor 11, the RF amplifier 40, the signal processing section 30, the encoder 33, the buffer memory 35, the laser control section 37, the servo processor 51, the interface 10, the memory 31, the flash ROM 32 and the like. In this regard, the main functions of consecutively recording means, counting means and recording speed adjustment means in the present invention are mainly carried out via the control means 9.

Further, in addition to the digitized signals described above, the RF amplifier 40 generates tracking error signals and focus error signals from the RF signals, and supplies these signals to the servo processor 51.

Based on the tracking error signals and focus error signals supplied from the RF amplifier 40, the servo processor 51 controls the driving of the actuator and/or the sled motor 7 via the actuator driver 21 and/or the sled driver 22 to properly move the optical pick-up 3 in the radial direction and/or the optical axis direction of the optical disc 2. Namely, a tracking servo and a focus servo are engaged (operated).

Further, the servo processor 51 controls the driving of the spindle motor 11 via the spindle driver 23 to rotate the optical disc 2 at a predetermined rotation speed. Here, in the optical disc drive 1, it is possible to properly establish the recording speed (disc rotation speed) at any one of multiple speed levels.

The buffer memory 35 is used for temporarily storing the data transferred from the host to be recorded onto the optical disc 2. Namely, the buffer memory 35 forms storage means for temporarily storing data transferred from the host in the present invention. The buffer memory 35 is constituted from a RAM having a predetermined capacity (for example, 2Mb (Mega bit)). This storage amount is constantly monitored via the control means 9, namely the control means 9 carries out checking whether or not the remaining amount of data in the buffer memory 35 falls below a predetermined amount. This predetermined amount is established at a data storage amount estimated for the occurrence of a buffer under-run error when writing process is continued after the data storage amount of the buffer memory 35 falls below such amount. When the data storage amount of the buffer memory 35 falls below the predetermined amount, the data recording operation (writing operation) is interrupted (suspended).

In response to instructions from the control means 9, the interface 10 transmits the signals and the like of the data supplied from the memory 31 to the host, and receives commands executed by the optical disc drive 1, the data to be recorded on the optical disc 2 described above and the like from the host. The interface 10 uses an existing interface standard such as ATAPI, SCSI, USB or the like.

The flash ROM 32 is a kind of EEPROM (Electrically Erasable and Programmable Read Only Memory) for storing firmware and the like, and generally firmware and the like for carrying out basic control of the optical disc drive 1 are pre-stored in the flash ROM 32.

In addition to the structure described above, the optical disc drive 1 includes the consecutively recording means of the present invention, namely, a consecutively recording means (i.e., a buffer under-run error avoidance function) which temporarily interrupts recording of the data onto the optical disc 2 in the case where the supply of data (the data transfer) from the host cannot keep up with the recording process and the data stored in the buffer memory 35 falls below a predetermined amount, and consecutively records the remaining data from the end of the recorded data in a substantially successive manner when the buffer memory 35 is filled with data,. This consecutively recording means operates mainly via the laser control section 37 and the servo processor 51 (actuator driver 21) by control from the control means 9.

Further, the counting means of the present invention which counts the number of recording interruptions is realized through counting operation in the control means 9, and operates incrementally in the case where recording process is interrupted when the amount of data temporarily stored in the buffer memory 35 falls below the predetermined amount.

The recording speed adjustment means of the present invention is realized by setting the recording speed at a predetermined recording speed via the spindle driver 23 by means of the control means 9.

Further, the control means 9 also functions as judgment means which judges whether a recording interruption is due to a regular cause or a sudden (irregular) cause via the counting means (counter) described above.

In the optical disc drive 1 having the structure described above, the buffer under-run error avoidance process is carried out as follows. Namely, the data transferred from the host is temporarily stored in the buffer memory 35 via the interface 10. The data storage amount of the buffer memory 35 is constantly monitored via the control means 9, and when such data amount falls below a predetermined amount (i.e., a data storage amount estimated for the occurrence of a buffer under-run error when writing process is continued after the data storage amount of the buffer memory 35 falls below such amount), the recording operation (data writing operation) is interrupted (suspended), and the system waits for the data transferred from the host to be stored in the buffer memory 35. When a certain amount of data is stored in the buffer memory 35, the end of the recorded data is detected, and then the remaining unrecorded data is consecutively recorded from such end, whereby it becomes possible to record data having continuity. This consecutive recording of data is carried out by detecting the end of the recorded data, and then consecutively recording the remaining unrecorded data while maintaining continuity of the end of the recorded data within the allowed standard and while synchronizing with synchronization signals obtained from the recorded data.

This consecutive recording of data can be achieved by various methods, and it is possible to use the methods disclosed in the prior-art documents described above, for example.

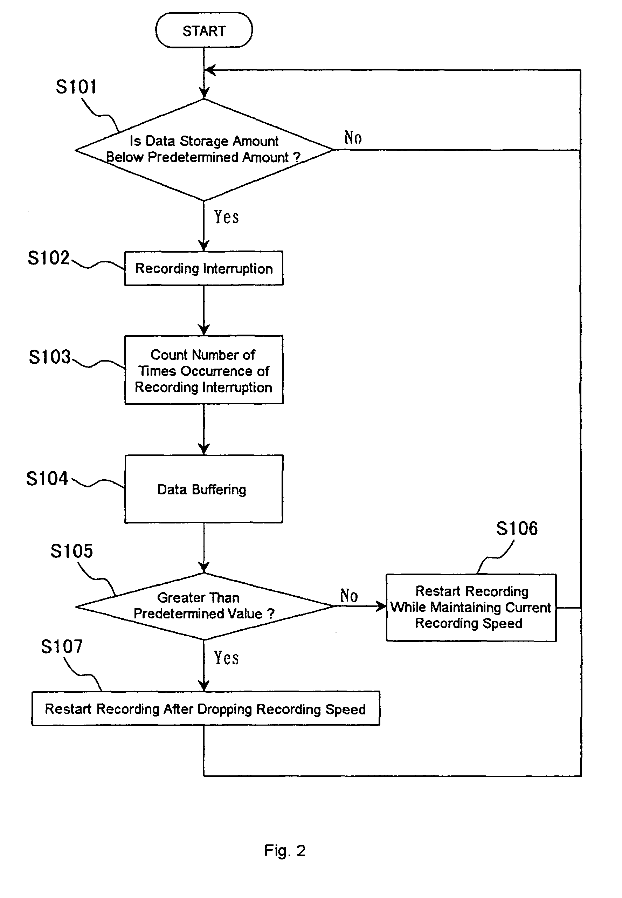

Fig. 2 is a flowchart illustrating the process in the first embodiment of the present invention. The program related to this flowchart is started at the same time as the beginning of the writing operation of the optical disc drive 1. When this program is started, first, the control means 9 monitors the remaining data amount (storage amount) of the buffer memory 35 (Step S101), and constantly checks whether or not the remaining data amount of the buffer memory 35 has fallen below the predetermined amount. As described above, this predetermined amount is established at a data storage amount estimated for the occurrence of a buffer under-run error when writing (recording) operation is continued after the data storage amount of the buffer memory 35 falls below such amount.

When the data storage amount of the buffer memory 35 falls below the predetermined amount, the program proceeds to Step S102, and the data recording operation is interrupted (suspended). Then, at Step S103, the number of times such recording operation has been interrupted, i.e., the number of recording interruptions is counted and added up. As described above, this counting operation is carried out by the control means 9. In the next step, i.e., at Step S104, the buffering of data transferred from the host is carried out in the buffer memory 35, namely, data is transferred from the host and stored in the buffer memory 35.

Next, at Step S105, it is judged whether or not the number of times the recording operation has been interrupted (the number of recording interruptions) is greater than a predetermined value. This predetermined value is established so that, by comparing the time T1, which is believed to be required in the case where all of the data would be recorded onto the optical disc with recording interruptions at the recording speed of the optical disc at which recording interruptions occur, with the time T2, which is believed to be required in the case where recording would be carried out at the recording speed one level lower than the present recording speed, the time T2 is shorter than the time T1.

In the case where it is judged that the number of recording interruptions is below the predetermined value (i.e., in the case where a No judgment is made at Step S105), the program proceeds to Step S106, and recording operation is restarted while maintaining the current recording speed to the optical disc. Namely, the remaining data is consecutively recorded from the end of the recorded data onto the optical disc at the current recording speed. Then, the program returns to Step S101, and once again the data storage amount of the buffer memory 35 is monitored.

On the other hand, at Step S105, in the case where it is judged that the number of recording interruptions is greater than the predetermined value, the program proceeds to Step S107, and the recording speed (rotation speed of the optical disc) is dropped one level to a lower recording speed and recording operation is restarted. Namely, the remaining data is consecutively recorded from the end of the recorded data on the optical disc at such the lower recording speed. Then, the program returns to Step S101, and once again the data storage amount of the buffer memory 35 is monitored at such the lower recording speed.

In accordance with the embodiment of the present invention described above, in the case where the number of recording interruptions that occur in order to avoid buffer under-run errors during the data recording operation at a recording speed of 32x speed, for example, is greater than the predetermined number, recording operation is continued after switching the recording speed one level lower to 16x speed. Namely, the remaining data is consecutively recorded from the end of the recorded data at the recording speed of 16x speed. In the case where such recording interruptions are caused by the performance of the host, even though the data transfer cannot keep up with recording operation at the recording speed of 32x speed, the data transfer can be sufficiently carried out at the recording speed of 16x speed. In such case, since the recording interruptions caused by the performance of the host are eliminated, it is possible to shorten the recording time compared with the case where all of the data would be recorded onto the optical disc with recording interruptions (and consecutive recording) at the recording speed of 32x speed.

Further, in the embodiment described above, it has been described that the recording speed was switched one level to a lower speed. However, needless to say, in the case where lowering the recording speed by one level is insufficient, it is possible to lower the recording speed one more level, i.e., two levels (for example, to 8x speed). Furthermore, in the case where there is a limit to the data transfer speed such as in USB connection type optical disc drives, the recording speed can be switched to a corresponding proper recording speed (for example, 4x speed).

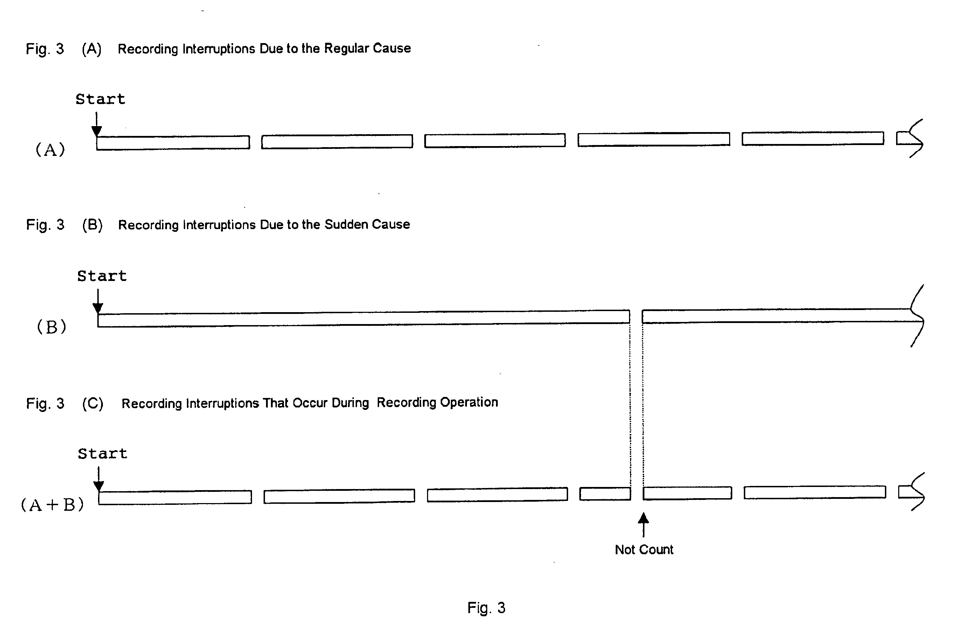

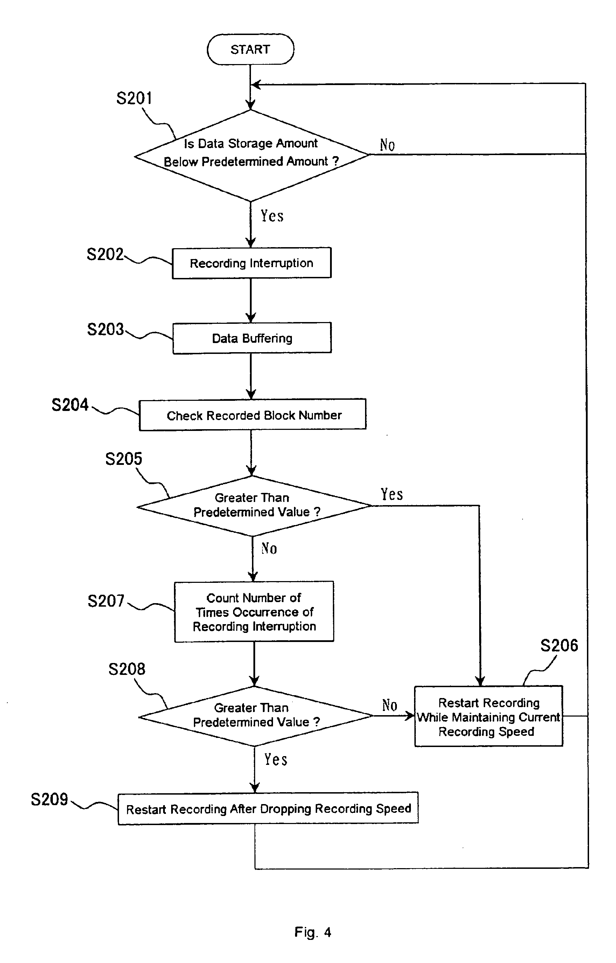

Next, a second embodiment of the present invention will be described with reference to Fig. 3 and Fig. 4.

Fig. 3 is an explanatory drawing for describing regular interruptions and sudden interruptions in the recording interruptions for buffer under-run error avoidance during the data recording onto an optical disc. As shown in Fig. 3A, the recording interruptions due to the regular cause are mainly due to the performance of the host, and for this reason, such interruptions tend to occur (cyclically) at regular intervals. On the other hand, as shown in Fig. 3B, recording interruptions due to the sudden cause occur in the case where, for example, another application software is started in the host during data transfer by the host, and for this reason, sudden interruptions tend to occur irregularly and its occurrence interval tends to be long.

In the second embodiment of the present invention, the optical disc drive according to the first embodiment is further provided with judgment means which judges whether a recording interruption is due to a regular cause or a sudden cause. In this case, the counting means counts the number of recording interruptions due to the regular cause. In this regard, if the number of all the recording interruptions for buffer under-run error avoidance are counted as in the first embodiment described above, such counting operation includes recording interruptions due to the sudden cause. Therefore, in the case where the recording speed is switched needlessly to a lower speed, as a result, there is the possibility that the recording time will be increased.

Accordingly, in the second embodiment, the judgment of whether a recording interruption is due to a regular cause or a sudden cause is carried out based on the block number that has been recorded onto the optical disc until the occurrence of such interruption. Namely, recording interruptions occurring at substantially each constant block number (i.e., occurring substantially cyclically) are assumed (judged by the control means 9) to be recording interruptions due to the regular cause, and recording interruptions other than the above are assumed (judged by the control means 9) to be recording interruptions due to the sudden cause. As a result, as shown in Fig. 3C, since some recording interruptions are seen as recording interruptions due to the sudden cause, such interruptions are not counted.

Fig. 4 shows a flowchart for realizing the second embodiment of the present invention. In the same way as in the first embodiment, the program related to this flowchart is started at the same time as the beginning of the writing operation of the optical disc drive 1. When this program is started, first, the control means 9 monitors the remaining data amount (storage amount) of the buffer memory 35 (Step S201), and constantly checks whether or not the remaining data amount of the buffer memory 35 has fallen below the predetermined amount. As described above, this predetermined amount is established at a data storage amount estimated for the occurrence of a buffer under-run error when writing (recording) operation is continued after the data storage amount of the buffer memory 35 falls below such amount.

When the data storage amount of the buffer memory 35 falls below the predetermined amount, the program proceeds to Step S202, and the data recording operation (writing operation) is interrupted (suspended). When a recording interruption occurs at Step S202, then Step S203, the buffering of data transferred from the host is carried out in the buffer memory 35, namely, data is transferred from the host and stored in the buffer memory 35.

Next, at Step S204, the block number for which data has been recorded from the occurrence of the previous recording interruption (in the case of the first recording interruption, from the start of data writing (data recording)) to the occurrence of the current recording interruption is counted.

Then, at Step S205, it is judged whether or not such block number is greater than a predetermined value. In the case where it is judged that such block number is greater than the predetermined value, the recording interruption is judged to be a recording interruption due to a sudden cause, then the program proceeds to Step S206, and recording operation is restarted while maintaining the current recording speed. Namely, the remaining data is consecutively recorded from the end of the recorded data onto the optical disc at the current recording speed. As described above, the judgment involving this predetermined value is carried out based on the block number that has been recorded onto the optical disc until the occurrence of the current interruption. Namely, as described above, recording interruptions occurring at substantially each constant block number are assumed to be recording interruptions due to the regular cause, and recording interruptions other than the above are assumed to be recording interruptions due to the sudden cause. Then, the program returns to Step S201, and once again the data storage amount of the buffer memory 35 is monitored.

On the other hand, at Step S205, in the case where it is judged that the block number is below the predetermined value, the recording interruption is assumed to be a recording interruption due to a regular cause, which is caused by the performance of the host, and the program proceeds to Step S207. Then, at Step S207, the number of times the recording interruption has occurred is counted and added up.

Next, at Step S208, it is judged whether or not the number of times the recording interruption has occurred (the number of recording interruptions) is greater than a predetermined value. In the same way as in the first embodiment, this predetermined value is established so that, by comparing the time T1, which is believed to be required in the case where all of the data would be recorded onto the optical disc with recording interruptions at the recording speed of the optical disc at which recording interruptions occur, with the time T2, which is believed to be required in the case where recording would be carried out at the recording speed one level lower than the present recording speed, the time T2 is shorter than the time T1.

In the case where it is judged that the number of recording interruptions is below the predetermined value (i. e., in the case where a No judgment is made at Step S208), the program proceeds to Step S206, and recording operation is restarted while maintaining the current recording speed to the optical disc. Then, the program returns to Step S201, and once again the data storage amount of the buffer memory 35 is monitored.

On the other hand, at Step S208, in the case where it is judged that the number of recording interruptions is greater than the predetermined value, the program proceeds to Step S209, and the recording speed (rotation speed) of the disc is dropped one level to a lower recording speed and recording operation is restarted. Then, the program returns to Step S201, and once again the data storage amount of the buffer memory 35 is monitored at such the lower recording speed.

In the same way as in the first embodiment described above, in accordance with the second embodiment of the present invention described above, in the case where the number of recording interruptions that occur in order to avoid buffer under-run errors during the data recording operation at a recording speed of 32x speed, for example, is greater than the predetermined number, recording operation is continued after switching the recording speed one level lower to 16x speed. Namely, the remaining data is consecutively recorded from the end of the recorded data at the recording speed of 16x speed. In the case where such recording interruptions are caused by the performance of the host, even though the data transfer cannot keep up with recording operation at the recording speed of 32x speed, the data transfer can be sufficiently carried out at the recording speed of 16x speed. In such case, since the recording interruptions caused by the performance of the host are eliminated, it is possible to shorten the recording time compared with the case where all of the data would be recorded onto the optical disc with recording interruptions (and consecutive recording) at the recording speed of 32x speed.

Further, as described above, in the second embodiment, since only the recording interruptions due to the regular cause, which are mainly caused by the performance of the host, are selected to carry out counting, recording interruptions due to the sudden cause are excluded, and it becomes possible to switch to a proper recording speed in view of the performance of the host, whereby it becomes possible for the shortening of the recording time to be carried out at a higher accuracy.

Furthermore, the functions described above can be achieved by installing new programs in writable (recordable) optical disc drives. Thus, since there is no need to install additional components in the drive or change the design of the drive, such functions can be achieved easily without increasing the cost.

In the same way as in the first embodiment, in the second embodiment described above, it has been described that the recording speed was switched one level to a lower speed. However, needless to say, in the case where lowering the recording speed by one level is insufficient, it is possible to lower the recording speed one more level, i.e., two levels (for example, to 8x speed). Furthermore, in the case where there is a limit to the data transfer speed such as in USB connection type optical disc drives, the recording speed can be switched to a corresponding proper recording speed (for example, 4x speed).

As described above, it should be noted that even though the optical disc drive of the present invention has been described with reference to the preferred embodiments shown in the drawings, the present invention is not limited to these embodiments, it is of course possible to make various modifications or deformations, and various elements described above can be replaced with any other element capable of performing the same or a similar function.

For example, a temporal element may be added in the counting of the number of recording interruptions that occur to avoid buffer under-run errors in the first and second embodiments described above, and the recording speed may be switched to a lower recording speed in the case where the number of recording interruptions that occur within a predetermined time is greater than the predetermined number. Further, in the embodiments described above, descriptions were given for an optical disc drive capable of recording and reproducing an optical disc such as a CD-R, a CD-RW or the like, but the present invention is not limited to this, and can of course be applied to optical disc drives capable of recording and reproducing other kinds of recordable optical discs such as a DVD-R, a DVD-RW, a DVD+R, a DVD+RW, a DVD-RAM or the like.

As described above, the present invention makes it possible to shorten the recording time when many recording interruptions for buffer under-run error avoidance occur in an optical disc drive provided with a buffer under-run error avoidance function.

**Claims**

1. An optical disc drive capable of recording data received from a host onto a recordable optical disc at a recording speed of any one of multiple recording speed levels, the optical disc drive comprising:

   storage means for temporarily storing the data received from the host;
   consecutively recording means which temporarily interrupts recording of the data onto the optical disc in the case where the data transfer from the host cannot keep up with the recording process and the data stored in the storage means falls below a predetermined amount, and then consecutively records the remaining data from the end of the recorded data in a substantially successive manner when the storage means is filled with data transferred from the host;
   counting means for counting the number of recording interruptions performed by the consecutively recording means; and
   recording-speed adjustment means for adjusting the recording speed for the optical disc in the case where the count number by the counting means is greater than a predetermined value.

2. The optical disc drive according to claim 1, wherein the optical disc drive is adapted to be able to switch the recording speed of the optical disc at any one of multiple speed levels, and the recording-speed adjustment means switches the recording speed one level lower than the present recording speed in the case where the count number by the counting means is greater than the predetermined value.

3. The optical disc drive according to claim 2, wherein the predetermined value is established so that, by comparing the time T1, which is believed to be required in the case where all of the data would be recorded onto the optical disc with recording interruptions at the present recording speed of the optical disc at which the recording interruptions occur, with the time T2, which is believed to be required in the case where recording would be carried out at the recording speed one level lower than the present recording speed, the time T2 is shorter than the time T1.

4. The optical disc drive according to claim 2, wherein the counting means counts the number of recording interruptions in a predetermined time, and the recording-speed adjustment means switches the recording speed one level lower than the present recording speed in the case where the count number by the counting means is greater than the predetermined value.

5. The optical disc drive according to claim 1, further comprising judgment means for judging whether the recording interruption is due to a regular cause or a sudden cause, and wherein the counting means counts the number of recording interruptions due to the regular cause.

6. The optical disc drive according to claim 5, wherein the judgment means judges whether the recording interruption is due to the regular cause or the sudden cause based on the number of blocks that have been recorded until the recording interruption occurs.

7. The optical disc drive according to claim 6, wherein the judgment means judges the recording interruptions that have occurred at every substantially constant number of blocks as the recording interruptions due to the regular cause, and the recording interruptions other than the above as the recording interruptions due to the sudden cause.

8. The optical disc drive according to claim 5, wherein the recording-speed adjustment means switches the recording speed two or more levels lower than the present recording speed in the case where the recording interruptions due to the regular cause occur with increasing frequency.

9. The optical disc drive according to claim 5, wherein the regular cause is mainly caused by the performance of the host, and the sudden cause includes a cause in which the recording interruption would occur when other application software is started in the host during data transfer by the host.

10. A method of consecutively recording data onto a recordable optical disc in an optical disc drive, the optical disc drive being able to record the data received from a host onto the recordable optical disc at a recording speed of any one of multiple recording speed levels, the method comprising the steps of:

    temporarily storing the data received from the host in a buffer memory;
    temporarily interrupting recording of the data onto the optical disc in the case where the data transfer from the host cannot keep up with the recording process and the data stored in the buffer memory falls below a predetermined amount;

consecutively recording the remaining data from the end of the recorded data in a substantially successive manner when the buffer memory is filled with data transferred from the host;

counting the number of recording interruptions; and

adjusting the recording speed for the optical disc in the case where the count number in the counting step is greater than a predetermined value.

11. The method according to claim 10, wherein in the counting step the number of recording interruptions is counted in a predetermined time, and in the adjusting step the recording speed is switched one level lower than the present recording speed in the case where the count number is greater than the predetermined value.

12. The method according to claim 10, wherein in the adjusting step the recording speed is switched one level lower than the present recording speed in the case where the count number in the counting step is greater than the predetermined value.

13. The method according to claim 10, further comprising the step of:

judging whether the recording interruption is due to a regular cause or a sudden cause wherein in the counting step the number of recording interruptions due to the regular cause is counted.

14. The method according to claim 13, wherein in the adjusting step the recording speed is switched two or more levels lower than the present recording speed in the case where the recording interruptions due to the regular cause occurs with increasing frequency.

Fig. 1

EP 1 403 868 A2

START

S101

Is Data Storage Amount
Below Predetermined Amount ?

No

Yes

S102 — Recording Interruption

S103 — Count Number of
Times Occurrence of
Recording Interruption

S104 — Data Buffering

S106

S105

Greater Than
Predetermined Value ?

No

Restart Recording
While Maintaining Current
Recording Speed

S107

Yes

Restart Recording After Dropping Recording Speed

Fig. 2

Fig. 3   (A)   Recording Interruptions Due to the Regular Cause

Start

(A)

Fig. 3   (B)   Recording Interruptions Due to the Sudden Cause

Start

(B)

Fig. 3   (C)   Recording Interruptions That Occur During Recording Operation

Start

(A＋B)

Not Count

Fig. 3

EP 1 403 868 A2

START

S201

Is Data Storage Amount
Below Predetermined Amount ?　　No

Yes

S202　Recording Interruption

S203　Data Buffering

S204　Check Recorded Block Number

S205

Greater Than
Predetermined Value ?　　Yes

No

S207　Count Number of
Times Occurrence of
Recording Interruption

S208

Greater Than
Predetermined Value ?　　No

S206　Restart Recording
While Maintaining Current
Recording Speed

Yes

S209　Restart Recording After Dropping Recording Speed

Fig. 4

14